# EUROPÄISCHE PATENTANMELDUNG

(11) **EP 4 760 560 A1**
(43) Veröffentlichungstag der Anmeldung: **17.06.2026**
(21) Anmeldenummer: 24220219.0
(22) Anmeldetag: 16.12.2024
(51) Int. Cl.: G06F 21/51, G06F 21/64, G05B 19/05

(54) **VERFAHREN ZUM BETREIBEN EINER VIRTUELLEN SPEICHERPROGRAMMIERBAREN STEUERUNG**

(71) Anmelder: Siemens Aktiengesellschaft, 80333 München (DE)
(72) Erfinder: Hog, Ronny, 92245 Kümmersbruck (DE); Schweiger, Julia, 92242 Hirschau (DE); Schötz, Sebastian, 92256 Hahnbach (DE); Walter, Markus, 96050 Bamberg (DE)
(74) Vertreter: Siemens Patent Attorneys

(57) **Zusammenfassung**

Die Erfindung betrifft ein Verfahren zum Betreiben
- einer virtuellen speicherprogrammierbaren Steuerung (vPLC) mit einem Sicherheitsprogramm (F-Prog) auf einem ersten Rechnersystem (1) und
- einer virtuellen speicherprogrammierbaren Steuerung (vPLC) mit einem vom Sicherheitsprogramm (F-Prog) replizierten Sicherheitsprogramm (rF-Prog) auf einem zweiten Rechnersystem (2),
wobei zum Sicherstellen, dass auf dem zweiten Rechnersystem (2), also auf einer Instanz der virtuellen speicherprogrammierbaren Steuerung (vPLC) des ersten Rechnersystems (1), das vorhandene replizierte Sicherheitsprogramm (rF-Prog) dem Sicherheitsprogramm (F-Prog) auf dem ersten Rechnersystem (1) entspricht, wird beim Replizieren des Sicherheitsprogramms (F-Prog) für das zweite Rechnersystem (2) ein Verwaltungslisten-Abbild (VWL') von einem zentralen Signaturverwaltungs-Mittel (ZSV) des ersten Rechnersystems (1) für das zweite Rechnersystem (2) erzeugt.

## Beschreibung

Die Erfindung betrifft ein Verfahren zum Betreiben virtueller speicherprogrammierbarer Steuerungen, insbesondere zur Absicherung replizierter Sicherheitsprogramme in verteilten Systemen.

Bei virtuellen speicherprogrammierbaren Steuerungen (vPLCs) mit Sicherheitsprogrammen besteht die Herausforderung, die korrekte Replikation und Ausführung der Sicherheitsprogramme sicherzustellen, insbesondere wenn auf ein Backup-System umgeschaltet werden muss.

Eine virtuelle speicherprogrammierbare Steuerung ist eine Softwareimplementierung einer klassischen SPS, die auf einer abstrahierten Hardware-Plattform ausgeführt wird. Der Hauptvorteil virtueller Steuerungen liegt in der Unabhängigkeit von spezifischer Steuerungshardware bei gleichzeitiger Beibehaltung der vollen SPS-Funktionalität. Dies ermöglicht neue, flexible Automatisierungsarchitekturen.

Eine mögliche Ausgestaltung einer virtuellen speicherprogrammierbaren Steuerung (vPLC) könnte sein, dass die vPLC als Software-Instanz containerisiert in einer virtuellen Maschine zum Ablauf gebracht wird. Sie kann beliebig oft auf verfügbaren Plattformen instanziiert werden und enthält die komplette SPS-Funktionalität inkl. Echtzeitfähigkeit, sie kann über Ethernet-Ports mit Feldgeräten kommunizieren. Sie ermöglicht eine flexible Skalierung und Verteilung der Steuerungsfunktionen. Sie kann auch als Safety-SPS basierend auf Coding Processing per Software realisiert werden.

Die Safety-SPS läuft auf einer virtuellen Maschine auf Standard-IT-Hardware oder Industrie-PCs. Die Safety-SPS auf virtuellen Maschinen ermöglichen eine flexible Zuteilung von Rechen- und Speicherressourcen. Die virtuelle Ausführung bietet Vorteile wie Hardware-Unabhängigkeit, einfaches Deployment, zentrale Verwaltung und flexible Skalierung. Gleichzeitig bleiben die Echtzeitfähigkeit und Sicherheitsfunktionen erhalten.

Es ist eine Aufgabe der vorliegenden Erfindung, ein Verfahren bereitzustellen, welches eine Absicherung replizierter Sicherheitsprogramme für virtuelle speicherprogrammierbare Steuerungen realisiert. Spezifisch geht es darum, wie man sicherstellen kann, dass ein Sicherheitsprogramm, das auf einer virtuellen SPS läuft und möglicherweise auf mehrere Instanzen repliziert wird, korrekt und sicher ausgeführt wird.

Die Erfindung löst diese Aufgabe durch ein Verfahren zum Betreiben einer virtuellen speicherprogrammierbaren Steuerung mit einem Sicherheitsprogramm auf einem ersten Rechnersystem und einer virtuellen speicherprogrammierbaren Steuerung mit einem vom Sicherheitsprogramm replizierten Sicherheitsprogramm auf einem zweiten Rechnersystem.

Für den Fall, dass das erste Rechnersystem und/oder die darauf ablaufende virtuelle speicherprogrammierbare Steuerung ausfallen, wird auf das zweite Rechnersystem bzw. auf die darauf installierte virtuelle speicherprogrammierbare Steuerung mit dem replizierten Sicherheitsprogramm umgeschaltet.

Ein zentrales Signaturverwaltungs-Mittel wird betrieben, in welches eine Signatur und ein Zeitstempel des Sicherheitsprogramms in eine Verwaltungsliste eingetragen werden. Im Falle einer Änderung an dem Sicherheitsprogramm auf dem ersten Rechnersystem werden die sich entsprechend geänderte Signatur und der geänderte Zeitstempel in die Verwaltungsliste eingetragen.

Das zentrale Signaturverwaltungs-Mittel wird weiterhin betrieben, um die Signatur und den Zeitstempel in einen Kontroll-Datenbereich der virtuellen speicherprogrammierbaren Steuerung zu schreiben.

Zum Sicherstellen, dass auf dem zweiten Rechnersystem, also auf einer Instanz der virtuellen speicherprogrammierbaren Steuerung des ersten Rechnersystems, das vorhandene replizierte Sicherheitsprogramm dem Sicherheitsprogramm auf dem ersten Rechnersystem entspricht, wird beim Replizieren des Sicherheitsprogramms für das zweite Rechnersystem ein Verwaltungslisten-Abbild von dem zentralen Signaturverwaltungs-Mittel des ersten Rechnersystems für das zweite Rechnersystem erzeugt und zyklisch durch das zentrale Signaturverwaltungs-Mittel des ersten Rechnersystems aktualisiert.

Eine Prüfroutine wird auf der speicherprogrammierbaren Steuerung auf dem zweiten Rechnersystem betrieben, welche die Signatur und den Zeitstempel aus dem Kontroll-Datenbereich mit der Signatur und dem Zeitstempel aus dem Verwaltungslisten-Abbild vergleicht.

Für den Fall, dass auf das zweite Rechnersystem umgeschaltet wird, wird ein Startvorgang der Instanz der virtuellen speicherprogrammierbaren Steuerung zum Ausführen des replizierten Sicherheitsprogramms auf dem zweiten Rechnersystem nur dann ausgeführt, wenn die Signaturen und Zeitstempel übereinstimmen.

In einigen Ausführungsformen kann das zentrale Signaturverwaltungs-Mittel auf einem separaten Rechnersystem betrieben werden, das von dem ersten Rechnersystem und dem zweiten Rechnersystem unabhängig ist.

Die Aktualisierung des Verwaltungslisten-Abbilds kann in vordefinierten Zeitintervallen erfolgen.

Die Prüfroutine auf dem zweiten Rechnersystem kann in regelmäßigen Abständen ausgeführt werden, um die Konsistenz zwischen dem replizierten Sicherheitsprogramm und dem Sicherheitsprogramm sicherzustellen.

Bei Nichtübereinstimmung der Signaturen und Zeitstempel kann eine Aktualisierung des replizierten Sicherheitsprogramms auf dem zweiten Rechnersystem initiiert werden.

Die Signatur kann mittels eines kryptographischen Verfahrens erzeugt werden.

Das zentrale Signaturverwaltungs-Mittel kann eine Versionsverwaltung für das Sicherheitsprogramm und das replizierte Sicherheitsprogramm durchführen.

Bei einer Umschaltung auf das zweite Rechnersystem kann eine Benachrichtigung an einen Systemadministrator gesendet werden.

Das erste Rechnersystem und das zweite Rechnersystem können in getrennten physischen Standorten betrieben werden.

Die Kommunikation zwischen dem ersten Rechnersystem, dem zweiten Rechnersystem und dem zentralen Signaturverwaltungs-Mittel kann über eine verschlüsselte Verbindung erfolgen.

Bei Initiierung eines Run-Vorgangs in der Instanz der virtuellen speicherprogrammierbaren Steuerung auf dem zweiten Rechnersystem kann zunächst geprüft werden, ob Programmsignaturen und Zeitstempel im Kontroll-Datenbereich der Instanz vorhanden sind. Bei Vorhandensein von Programmsignaturen und Zeitstempeln im Kontroll-Datenbereich kann die Programmsignatur im Kontroll-Datenbereich auf einen Initialwert gesetzt werden und der Zeitstempel des Sicherheitsprogramms gleich dem Zeitstempel aus dem Kontroll-Datenbereich gesetzt werden.

Anschließend kann überprüft werden, ob eine Programmsignatur des Sicherheitsprogramms vorhanden ist. Bei vorhandener Programmsignatur des Sicherheitsprogramms kann zyklisch bis zu einem vordefinierten Timeout geprüft werden, ob die Programmsignatur im Kontroll-Datenbereich vom zentralen Signaturverwaltungs-Mittel beschrieben wurde. Bei Überschreitung des Timeouts kann die virtuelle speicherprogrammierbare Steuerung in einen Stopp-Zustand mit entsprechender Diagnose versetzt werden. Bei Beschreibung der Programmsignatur im Kontroll-Datenbereich durch das zentrale Signaturverwaltungs-Mittel innerhalb des Timeouts kann geprüft werden, ob der Zeitstempel im Kontroll-Datenbereich mit dem Zeitstempel des Sicherheitsprogramms übereinstimmt.

Bei Übereinstimmung der Zeitstempel kann die virtuelle speicherprogrammierbare Steuerung anlaufen. Bei Nichtübereinstimmung der Zeitstempel kann die virtuelle speicherprogrammierbare Steuerung in einen Stopp-Zustand mit entsprechender Diagnose versetzt werden, dass kein korrektes Sicherheitsprogramm vorliegt.

Bei Beendigung oder Deaktivierung einer Instanz der virtuellen speicherprogrammierbaren Steuerung auf dem ersten Rechnersystem oder dem zweiten Rechnersystem kann ein Ablöschvorgang durchgeführt werden. Dabei können alle sicherheitsrelevanten Daten, einschließlich des Sicherheitsprogramms oder des replizierten Sicherheitsprogramms, der Programmsignaturen und der Zeitstempel aus dem Speicher der betreffenden virtuellen speicherprogrammierbaren Steuerung gelöscht werden.

Das zentrale Signaturverwaltungs-Mittel kann über den Ablöschvorgang informiert werden und die entsprechenden Einträge in der Verwaltungsliste für die betroffene Instanz entfernen oder als ungültig markieren. Bei einer späteren Reaktivierung der Instanz kann eine vollständige Neuinitialisierung und Synchronisation mit dem zentralen Signaturverwaltungs-Mittel durchgeführt werden, um die Integrität und Aktualität des Sicherheitsprogramms oder des replizierten Sicherheitsprogramms sicherzustellen.

Die Prüfroutine kann innerhalb einer Laufzeit-Umgebung der virtuellen speicherprogrammierbaren Steuerung betrieben werden. Die Laufzeit-Umgebung kann als Firmware der virtuellen speicherprogrammierbaren Steuerung implementiert sein. Die Laufzeit-Umgebung kann das Sicherheitsprogramm oder das replizierte Sicherheitsprogramm ausführen und den Kontroll-Datenbereich verwalten, in dem die Signatur und der Zeitstempel gespeichert sind.

Es kann eine Edge-App installiert werden, in welcher das zentrale Signaturverwaltungs-Mittel für alle Sicherheitsprogramme in einem Edge-System betrieben wird. Die Edge-App kann die Verwaltungsliste mit den Programmsignaturen und den Zeitstempeln für alle verbundenen fehlersicheren virtuellen PLCs verwalten. Die Edge-App kann ein Datenmanagement ausführen, welches Programmsignaturen und Zeitstempel für jedes Sicherheitsprogramm speichert und aktualisiert.

Die Edge-App kann ein Kommunikations-Mittel betreiben, welches auf den Speicherbereich der Signaturen und Zeitstempel sowie den Kontroll-Bereich dieser innerhalb der Safety vPLC liest und schreibt. Die Edge-App kann eine zentrale Verwaltungsinstanz für die Sicherheit und Integrität aller Sicherheitsprogramme im Edge-System darstellen.

Zusammenfassend kann gesagt werden, dass das erfindungsgemäße Verfahren eine sichere und zuverlässige Replikation und Ausführung von Sicherheitsprogrammen in virtuellen speicherprogrammierbaren Steuerungen ermöglicht. Durch den Einsatz von Signaturen, Zeitstempeln und einem zentralen Verwaltungssystem wird sichergestellt, dass bei einer Umschaltung auf ein Backup-System stets die korrekte und aktuelle Version des Sicherheitsprogramms ausgeführt wird. Die Prüfroutine auf dem zweiten Rechnersystem kann dabei in regelmäßigen Abständen die Konsistenz zwischen dem replizierten Sicherheitsprogramm und dem ursprünglichen Sicherheitsprogramm überprüfen, um die Integrität des Systems zu gewährleisten. Die Prüfroutine kann in einigen Fällen auch einen Anlauf verhindern, wenn keine Übereinstimmung der Signaturen und Zeitstempel festgestellt wird. Das Verwaltungslisten-Abbild und der Kontroll-Datenbereich können dabei eine wichtige Rolle spielen, um die Konsistenz und Aktualität der Sicherheitsprogramme sicherzustellen.

Die Zeichnung zeigt Ausführungsbeispiele der Erfindung, dabei zeigt
- FIG 1: einen schematisch dargestellten Mechanismus, um eine Absicherung replizierter Sicherheitsprogramme mehrere Instanzen der Safety vPLCen auf einem zweiten Rechnersystem zu realisieren,
- FIG 2: einen schematisch dargestellten Mechanismus, um eine Umschaltung von dem ersten auf das zweite Rechnersystem zu verdeutlichen,
- FIG 3: einen schematisch dargestellten Mechanismus, um eine Absicherung replizierter Sicherheitsprogramme auf einer Vielzahl von weiteren Rechnersystemen zu realisieren,
- FIG 4: ein periodisches Verarbeiten auf einem zentralen Signaturverwaltungs-Mittel und
- FIG 5: einen Ablauf bei einem Startup einer virtuellen PLC-Instanz und
- FIG 6: einen weiteren Mechanismus, um eine Absicherung replizierter Sicherheitsprogramme zu gewährleisten.

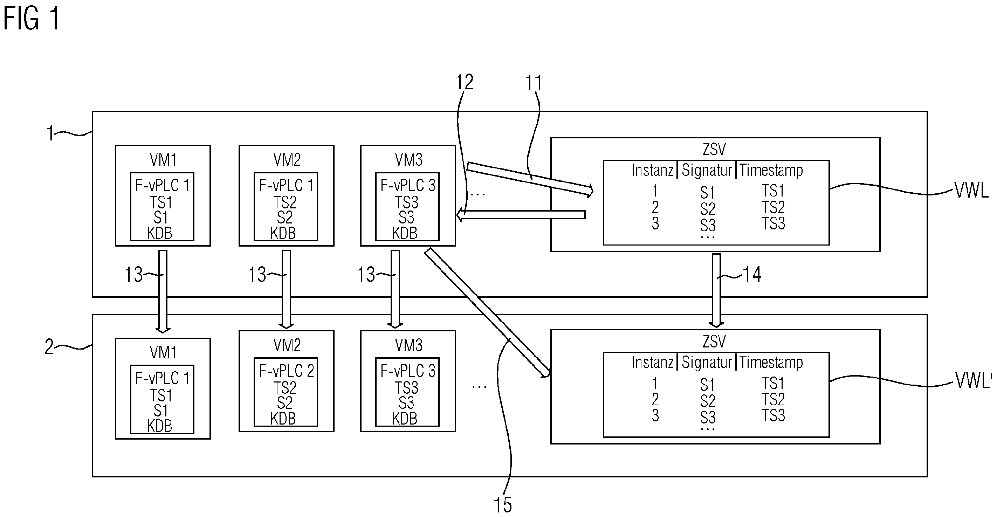

FIG 1 zeigt ein redundantes Serversystem zur Verwaltung virtueller speicherprogrammierbarer Steuerungen vPLCs, insbesondere fehlersichere virtueller speicherprogrammierbarer Steuerungen F-vPLCs in einer verteilten Umgebung. Das System umfasst ein erstes Rechnersystem 1, ausgestaltet als ein Server mit aktiven virtuellen Maschinen VM1 bis VMn und ein zweites Rechnersystem 2, ausgestaltet als ein Replikaserver mit Standby-virtuellen Maschinen VM1 bis VMn.

Das erste Rechnersystem 1 mit aktiven virtuellen Maschinen VM1 bis VMn enthält mehrere virtuelle Maschinen, die jeweils eine fehlersichere vPLC nämliche eine F-vPLC hosten. Jede virtuelle Maschinen VM1 enthält einen Zeitstempel, eine Signatur und eine Kontroll-Datenbereich KDB. Dementsprechend enthält die erste fehlersichere virtuelle speicherprogrammierbare Steuerung F-vPLC1 eine erste Signatur S1, einen ersten Zeitstempel TS1 und einen Kontroll-Datenbereich KDB, usw.. Neben dem aktiven Server befindet sich eine zentrale Signaturverwaltungskomponente ZSV. Diese Komponente enthält eine Tabelle mit Instanzkennungen, entsprechenden Signaturen und Zeitstempeln für jede FvPLC-Instanz.

Der Replikaserver, also das zweite Rechnersystem 2 mit den Standby-virtuellen Maschinen VM1 bis VMn spiegelt die Struktur des aktiven Servers wider, welcher entsprechende VMs, nämlich F-vPLC1,F-vPLC2,F-vPLC3,..., mit ihren jeweiligen F-vPLCs, Zeitstempeln, nämlich TS1,TS2,TS3,..., Signaturen, nämlich S1,S2,S3,..., und jeweils einen Kontroll-Datenbereich KDB aufweist.

Das zentrale Signaturverwaltungs-Mittel ZSV wird betrieben, eine Signatur S1 und einen Zeitstempel TS1 in eine Verwaltungsliste VWL einzutragen, wobei im Falle einer Änderung an dem Sicherheitsprogramm F-Prog auf dem ersten Rechnersystem 1, die sich entsprechend geänderte Signatur S1 und der geänderte Zeitstempel TS1 in die Verwaltungsliste VWL eingetragen werden. Das zentrale Signaturverwaltungs-Mittel ZSV bekommt über einen Einleseschritt 11 demnach alle Signaturen und Zeitstempel der vorhandenen virtuellen Maschinen VM1,VM2,VM3. In der Verwaltungsliste VWL sind demnach die virtuellen Maschinen und ihre zugehörigen Instanzen eingetragen. In einem Zurückschreibeschritt 12 wird das zentrale Signaturverwaltungs-Mittel ZSV derart betrieben, dass die Signaturen in den Kontroll-Datenbereich KDB der Instanzen, sowohl im ersten Rechnersystem 1 als auch im zweiten Rechnersystem 2, zurückgeschrieben werden.

In einem Replizierungsschritt 13 werden von dem ersten Rechnersystem 1 die virtuellen Maschinen VM1,VM2,VM3 mit ihren virtuellen fehlersicheren Steuerungen F-VPLC1,F-VPLC2 und F-VPLC3 auf das zweite Rechnersystem 2 als Replikation übertragen.

Beim Replizieren des Sicherheitsprogramms F-Prog bzw. beim Replizieren der virtuellen Maschinen VM1,VM2,VM3, wird für das zweite Rechnersystem 2 ein Verwaltungslisten-Abbild VWL' von dem zentralen Signaturverwaltungs-Mittel ZSV des ersten Rechnersystems 1 für das zweite Rechnersystem 2 erzeugt und zyklisch durch das zentrale Signaturverwaltungs-Mittel ZSV des ersten Rechnersystems 1 in einem Abbildungsschritt 14 aktualisiert. Für den Fall, dass von dem ersten Rechnersystem 1 auf das zweite Rechnersystem 2 umgeschaltet wird, wird ein Startvorgang der entsprechenden Instanz der virtuellen speicherprogrammierbaren Steuerung F-vPLC zum Ausführen des replizierten Sicherheitsprogramms rF-Prog auf dem zweiten Rechnersystem 2 nur dann ausgeführt, wenn die Signaturen und Zeitstempel übereinstimmen. Sollte sich ein Sicherheitsprogramm F-Prog in einer F-vPLC ändern, so wird in einem Ablöschschritt 15 das Verwaltungslisten-Abbild VWL' gelöscht und anschließend durch den Abbildungsschritt 14 neu erzeugt.

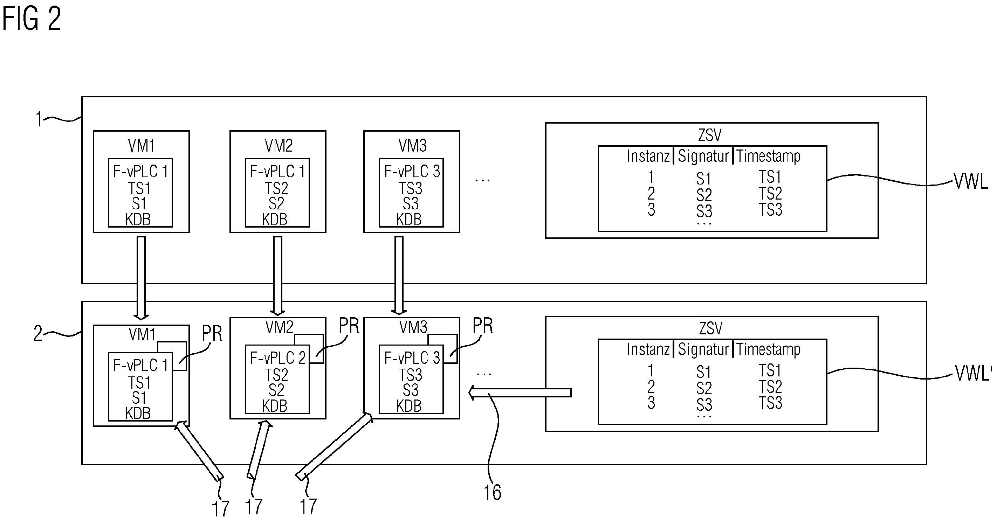

Gemäß FIG 2 wird das Umschalten von dem ersten Rechnersystem 1 auf das zweite Rechnersystem 2 dargestellt. Um zu gewährleisten, dass die replizierten Sicherheitsprogramme F-Prog keine Fehler aufweisen, wird eine Prüfroutine PR auf den entsprechenden fehlersicheren speicherprogrammierbaren Steuerungen F-vPLC's auf dem zweiten Rechnersystem 2 betrieben. Das Ausführen der Prüfroutine PR wird durch den Prüfmechanismus 17 symbolisiert. In einem Sicherungsschritt 16 werden vor dem Prüfen periodisch alle Signaturen aus dem Verwaltungslistenabbild VWL' in die entsprechenden replizierten virtuellen Maschinen VM1,VM2,VM3 bzw. in die fehlersicheren virtuellen Steuerungen F-vPLC's zurückgeschrieben.

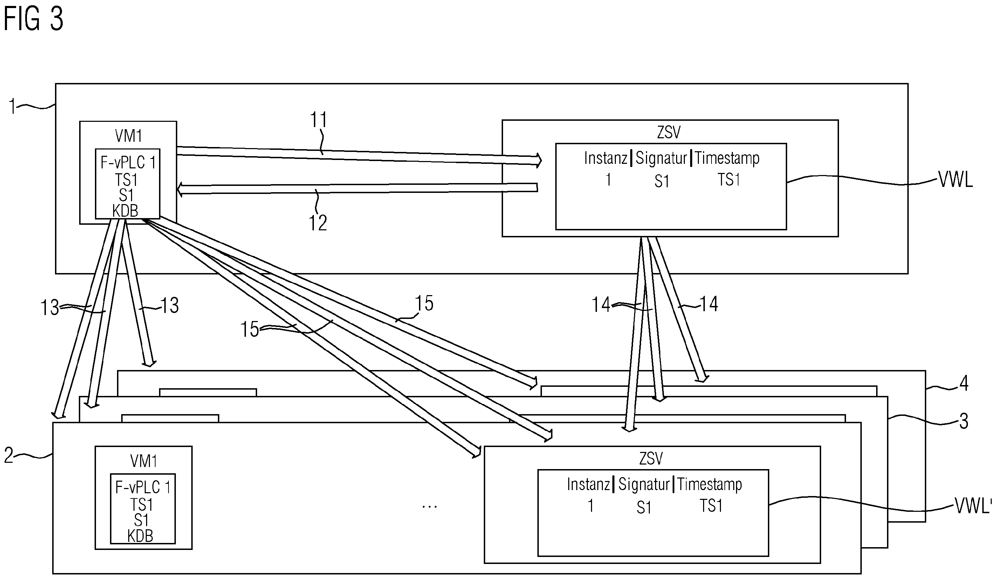

Gemäß FIG 3 ist eine weitere Möglichkeit der Replizierung von virtuellen Maschinen VM`s bzw. von virtuellen speicherprogrammierbaren Steuerungen T-vPLC dargestellt. Von einem ersten Rechnersystem 1 wird jeweils eine virtuelle Maschine VM1 auf ein zweites Rechnersystem 2, ein drittes Rechnersystem 3, ... bis hin zu einem n-ten Rechnersystem repliziert. Es sind demnach ein erster Replikaserver 1, ein zweiter Replikaserver 2, ... bis hin zu einem n-ten Replikaserver n entstanden. Auf dem ersten Rechnersystem 1 wird nach wie vor in einem Einleseschritt 11 das zentrale Signaturverwaltungs-Mittel ZSV mit Signatur S1 und Zeitstempel TS1 gefüllt. In einem Zurückschreibeschritt 12 werden die Signatur S1 und der Zeitstempel TS1 in den Kontrolldatenbereich KDB zurückgeschrieben. Beim Replizieren der einzelnen virtuellen Maschinen VM1 wird in jede Instanz über den Abbildungsschritt 14 nun jeweils ein Verwaltungslisten-Abbild VWL' geschrieben. Sollte nun auf dem ersten Rechnersystem 1 ein neues Sicherheitsprogramm F-Prog geladen werden, so wird über einen Ablöschschritt 15 in jeder Replika des zentralen Signaturverwaltungs-Mittel ZSV bzw. in den Verwaltungslisten-Abbildern VWL' ein Ablöschen der Daten gefordert. Dies kann beispielsweise durch ein Skript von einem Anwender durchgeführt werden.

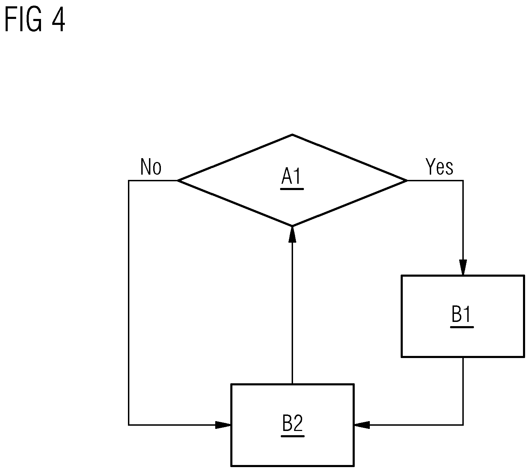

Gemäß FIG 4 ist eine periodische Verarbeitung des zentralen Signaturverwaltungs-Mittel ZSV dargestellt. In einer ersten Abfrage A1 wird geprüft, ob sich eine Programm-ID also z.B. eine Programmsignatur S1 auf einer Instanz der virtuellen speicherprogrammierbaren Steuerung vPLC geändert hat. Ist dies der Fall, wird die Signatur und der Zeitstempel für die jeweilige Instanz auf dem zentralen Signaturverwaltungs-Mittel ZSV aktualisiert. Danach werden alle Programmsignaturen und Zeitstempel vom ZSV immer zurück in den Kontroll-Datenbereich KDB der jeweiligen Instanz geschrieben.

Der Entscheidungsprozess für die Verwaltung einer virtuellen speicherprogrammierbaren Steuerung vPLC umfasst eine Reihe von Schritten und Entscheidungen. Zu Beginn des Prozesses wird eine Entscheidung A1 getroffen. Diese Entscheidung A1 kann auf verschiedenen Faktoren basieren, die mit dem Betrieb oder der Konfiguration der vPLC zusammenhängen.

Wenn das Ergebnis der Entscheidung A1 positiv ist, wird ein Schritt B1 ausgeführt. Schritt B1 kann die Durchführung einer bestimmten Aktion oder einer Reihe von Aktionen im Zusammenhang mit der vPLC-Verwaltung beinhalten. Diese Aktionen können beispielsweise das Aktualisieren von Konfigurationsparametern, die Überprüfung der Systemintegrität oder das Initiieren eines bestimmten Betriebsmodus umfassen.

Unabhängig vom Ergebnis der Entscheidung A1 geht der Prozess zu einem Schritt B2 über. Schritt B2 wird ausgeführt, unabhängig davon, ob Schritt B1 durchgeführt wurde. Schritt B2 kann zusätzliche Aktionen oder Überprüfungen im Zusammenhang mit dem vPLC-Verwaltungsprozess beinhalten.

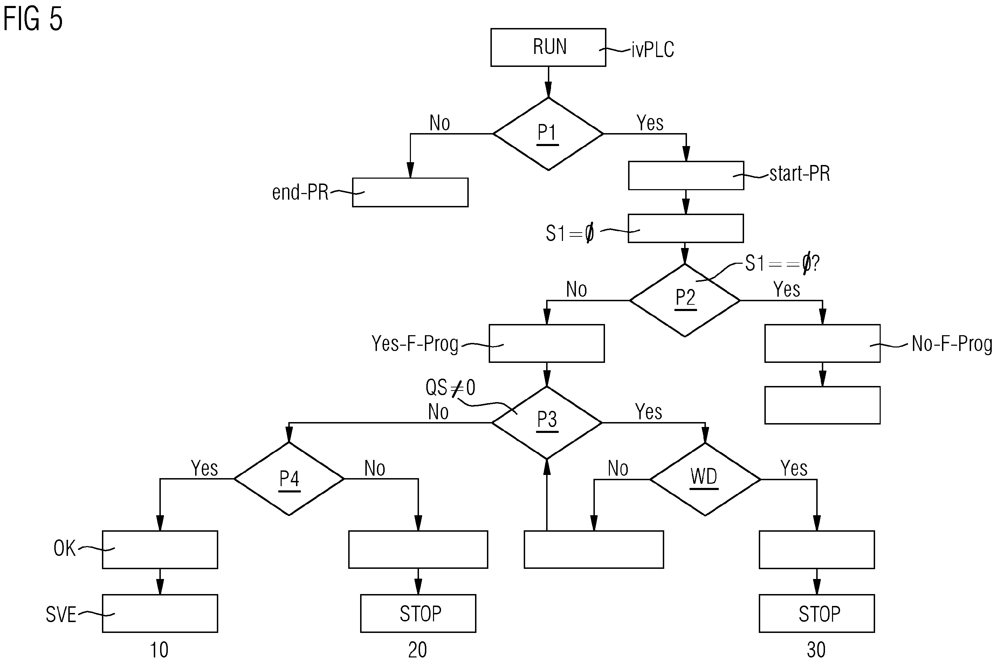

Gemäß FIG 5 ist ein Ablauf beim Anlauf einer virtuellen speicherprogrammierbaren Steuerung ivPLC bzw. F-vPLC dargestellt. Es beginnt mit der Initiierung eines Run-Vorganges RUN in der Instanz der virtuellen speicherprogrammierbaren Steuerung vPLC. In einer ersten Prüfung P1 wird geprüft, ob Programmsignaturen S und Zeitstempel TS im Kontroll-Bereich der Instanz überhaupt vorhanden sind, damit wird geprüft, ob für diese Instanz der virtuellen speicherprogrammierbaren Steuerung vPLC überhaupt ein Replizierungskonzept vorliegt. Ist dies nicht der Fall, wird davon ausgegangen, dass kein Replizierungskonzept vorliegt und die vPLC läuft an, sind aber die genannten Programmsignaturen S1 und die entsprechenden Zeitstempel TS1 im Kontroll-Datenbereich KDB vorhanden, so wird davon ausgegangen, dass ein Replizierungskonzept vorliegt.

Die Programmsignatur im Kontrollbereich erhält den Initialwert 0 und der Zeitstempel des F-progs wird gleich dem Zeitstempel aus dem Kontrollbereich gesetzt. Danach wird überprüft, ob eine Programmsignatur des F-Programms vorhanden ist. Ist diese gleich 0 so ist kein F-Programm geladen und die vPLC läuft an. Ist ein F-Programm geladen wird überprüft, ob der Initialwert der Programmsignatur im Kontrollbereich bereits vom ZSV beschrieben wurde. Ist dies nicht der Fall wird zyklisch bis zu einem gewissen Timeout geprüft.

Wird der Timeout überschritten geht die vPLC in STOP mit einer entsprechenden Diagnose. Wird die Programmsignatur im Kontrollbereich, innerhalb der Timeout vom ZSV beschrieben wird anschließend geprüft, ob der Zeitstempel im Kontrolldaten-Bereich KDB mit dem Zeitstempel des F-Progr übereinstimmt, stimmen diese überein, so ist in der Replika das korrekte F-Programm vorhanden und die vPLC läuft an. Unterscheiden sich die beiden Zeitstempel geht die vPLC in STOP mit entsprechender Diagnose, dass es sich nicht um ein korrektes F-Prog handelt.

Der Prozess zur Prüfung mit der Prüfroutine PR in einer virtuellen speicherprogrammierbaren Steuerung vPLC umfasst demnach mehrere Schritte und Entscheidungspunkte. Eine vPLC-Anwendung startet im Zustand "RUN" und geht zu einem Schritt P1 über. Bei Schritt P1 wird eine Bedingung überprüft. Wenn die Bedingung nicht erfüllt ist, wechselt der Prozess in den Zustand "end-PR". Wenn die Bedingung erfüllt ist, geht der Prozess in den Zustand "start-PR" über.

Nach dem Zustand "start-PR" erreicht der Prozess einen Schritt P2. Bei Schritt P2 wird überprüft, ob eine bestimmte Bedingung wahr ist. Wenn die Bedingung wahr ist, wechselt der Prozess in den Zustand "No-F-Prog". Wenn die Bedingung falsch ist, geht der Prozess in den Zustand "Yes-F-Prog" über.

Nach dem Zustand "Yes-F-Prog" erreicht der Prozess einen Schritt P3. Bei Schritt P3 werden mehrere Bedingungen überprüft. Wenn diese Bedingungen erfüllt sind, geht der Prozess zu einem Schritt P4 über. Wenn die Bedingungen bei Schritt P3 nicht erfüllt sind, wechselt der Prozess zu einem Watchdog-Entscheidungsschritt.

Beim Watchdog-Schritt wechselt der Prozess in einen "STOP"-Zustand, der als Kennung 30 gekennzeichnet ist, wenn eine Bedingung erfüllt ist. Wenn die Watchdog-Bedingung nicht erfüllt ist, kehrt der Prozess zu Schritt P3 zurück.

Bei Schritt P4 wechselt der Prozess in einen "OK"-Zustand, gefolgt von einem "SVE"-Zustand, die beide als Kennung 10 gekennzeichnet sind, wenn eine Bedingung erfüllt ist. Wenn die Bedingung bei Schritt P4 nicht erfüllt ist, wechselt der Prozess in einen "STOP"-Zustand, der als Kennung 20 gekennzeichnet ist.

Beim Umschalten auf eine Replika-virtuelle Maschine VM oder beim Starten eines Replikas startet die vPLC-Anwendung und die Firmware überprüft, ob Signaturen und Zeitstempel übereinstimmen. Die vPLC kann möglicherweise nur dann mit der Ausführung des Sicherheitsprogramms beginnen, wenn Signaturen und Zeitstempel übereinstimmen.

Dieser Überprüfungsprozess kann die Integrität und Konsistenz des Sicherheitsprogramms über verschiedene Instanzen der vPLC hinweg sicherstellen.

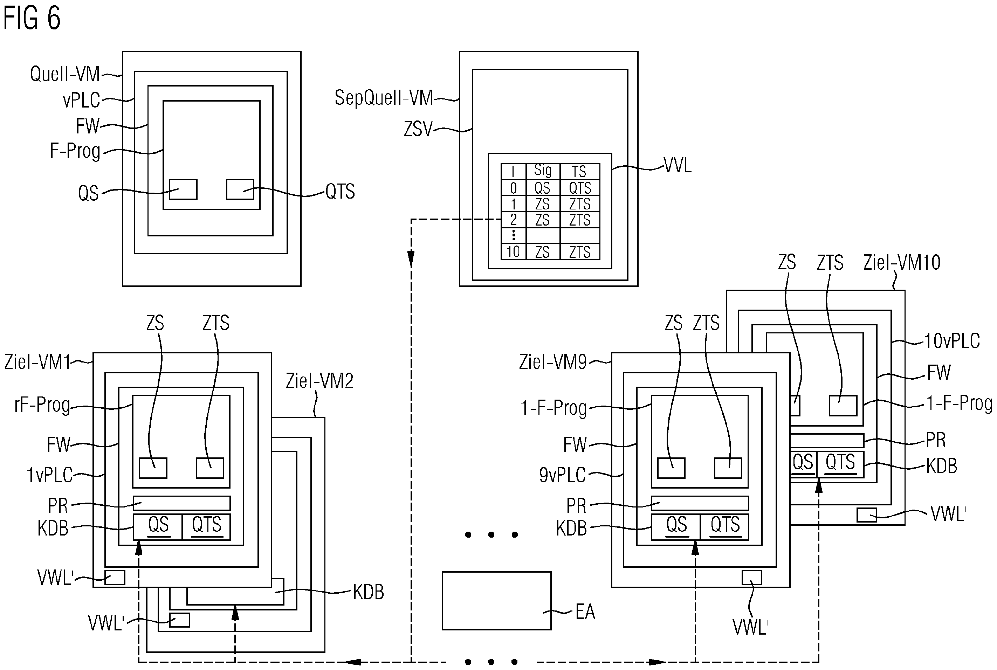

FIG 6 zeigt ein Beisipiel, welches man auf Serienmaschinen anwenden könnte. Eine Quell-virtuelle Maschine Quell-VM, eine separate Quell-virtuelle Maschine sepQuell-VM und mehrere Ziel-virtuelle Maschinen Ziel-VM1,... ,Ziel-VM10 sind dargestellt. In der Quell-virtuellen Maschine Quell-VM ist eine virtuelle speicherprogrammierbare Steuerung vPLC implementiert. Innerhalb dieser virtuellen speicherprogrammierbaren Steuerung vPLC ist eine Laufzeit-Umgebung FW vorhanden. In der Laufzeit-Umgebung FW, welche man auch als eine Firmware der virtuellen speicherprogrammierbaren Steuerung vPLC ansehen könnte, ist ein Sicherheitsprogramm F-Prog vorhanden. Dem Sicherheitsprogramm F-Prog ist eine Quell-Programmsignatur QS und ein Quell-Zeitstempel QTS zugeordnet. Um die korrekten Datenreplikationen abzusichern, wird ein zentrales Signaturverwaltungs-Mittel ZSV auf der separaten Quell-virtuellen Maschine sepQuell-VM betrieben. Das Signaturverwaltungs-Mittel ZSV ist derart ausgestaltet, dass es in einer Verwaltungsliste VVL, die Quell-Programmsignatur QS, den Quell-Zeitstempel QTS und zumindest eine Ziel-Programmsignatur ZS und zumindest einen Ziel-Zeitstempel ZTS verwalten kann.

In dem Beispiel gemäß FIG 6 verwaltet die Verwaltungsliste VVL gleich zehn virtuelle Maschinen, nämlich eine erste Ziel-virtuelle Maschine Ziel-VM1 bis zu einer zehnten Ziel-virtuelle Maschine Ziel-VM10. Die Verwaltungsliste VVL ist dreispaltig aufgebaut. In einer ersten Spalte ist eine Instanz I von 0 bis 10 eingetragen. In einer zweiten Spalte ist die Signatur der Programme eingetragen. In einer dritten Spalte sind die jeweiligen Zeitstempel TS der Programme eingetragen. Die Instanz i ist hier beispielsweise von 0 bis 10 angegeben, dabei bedeutet i = 0, das ist die Ursprungsquelle bzw. das Sicherheitsprogramm F-Prog der Quell-virtuellen Maschine Quell-VM. i = 1 bedeutet die erste Instanz der virtuellen speicherprogrammierbaren Steuerung bis i = 10 zur zehnten Instanz der virtuellen speicherprogrammierbaren Steuerung.

Wird nun ein Sicherheitsprogramm F-Prog von der Quell-virtuellen Maschine Quell-VM auf eine Ziel-virtuelle Maschine Ziel-VM repliziert, so wird das replizierte Sicherheitsprogramms rF-Prog in einer Instanz der virtuellen speicherprogrammierbaren Steuerung iv-PLC bereitgestellt. Damit hat z.B. die erste Ziel-virtuelle Maschine Ziel-VM1 ein repliziertes Sicherheitsprogramm RF-Prog erhalten. In dem replizierten Sicherheitsprogramm rF-Prog gibt es eine Ziel-Programmsignatur ZS und einen Ziel-Zeitstempel ZTS. Das zentrale Signaturverwaltungs-Mittel ZSV ist ausgestaltet, zyklisch die Quell-Programmsignatur QS und den Quell-Zeitstempel QTS von dem "Original"-Programm in die virtuellen Maschinen zu schreiben. Das periodische Schreiben der Quell-Programmsignatur QS und des Quell-Zeitstempels QTS erfolgt in einen Kontroll-Datenbereich KDB der entsprechenden Instanzen der virtuellen speicherprogrammierbaren Steuerung ivPLC mit dem jeweils zugehörigen entsprechenden replizierten Sicherheitsprogramm rF-Prog auf die jeweilige Ziel-virtuelle Maschine Ziel-VM.

In jeder Laufzeitumgebung FB einer jeweiligen Ziel-virtuellen Maschine Ziel-VM1,...,Ziel-VM10 ist eine Prüfroutine PR vorhanden. Die Prüfroutine PR wird auf jeder Ziel-virtuellen Maschine Ziel-VM derart betrieben, dass sie die Quell-Programmsignatur QS und den Quell-Zeitstempel QTS aus dem Kontroll-Datenbereich KDB mit der Ziel-Programmsignatur ZS und dem Ziel-Zeitstempel ZTS des replizierten Sicherheitsprogramm rF-Prog vergleicht. Weiterhin ist die Prüfroutine PR ausgestaltet, dass wenn die Signaturen und Zeitstempel übereinstimmen, ein Startvorgang der Instanz der virtuellen speicherprogrammierbaren Steuerung ivPLC zum Ausführen des replizierten Sicherheitsprogramms rF-Prog auf der Ziel-virtuellen Maschine Ziel-VM gestattet wird.

Es ist auch möglich, dass eine Edge-Anwendung EA, wie beispielsweise ein S7-Connector oder eine modifizierte Version davon, die Signaturen für die angeschlossenen F-vPLCs verwaltet.

Diese Anwendung interagiert möglicherweise mit dem zentralen Signaturverwaltungssystem, um aktuelle Signaturinformationen für jede vPLC-lnstanz zu pflegen.

Das System zeigt Verbindungen zwischen der SepQuell-VM und den anderen VMs, die durch gestrichelte Linien dargestellt sind. Diese Verbindungen können den Fluss von Signatur- und Zeitstempelinformationen zwischen der zentralen Verwaltungskomponente und den einzelnen VMs darstellen und eine Synchronisierung und Überprüfung von Sicherheitsprogrammen in der verteilten Umgebung ermöglichen.

Die zentralisierte Natur des zentralen Signaturverwaltungs-Mittel ZSV kann mehrere Vorteile bieten. Erstens kann das System möglicherweise leicht Diskrepanzen oder unbefugte Änderungen in den Sicherheitsprogrammen erkennen, indem es die gespeicherten Signaturen mit dem aktuellen Zustand jeder vPLC vergleicht. Zweitens können die Zeitstempel es dem System ermöglichen zu identifizieren, wann Änderungen aufgetreten sind, und gegebenenfalls auf frühere bekannte gute Zustände zurückzusetzen. Schließlich kann der zentralisierte Ansatz die Verwaltung und Synchronisierung sicherheitsrelevanter Programmdaten über mehrere virtuelle SPSen hinweg vereinfachen und so die Gesamtzuverlässigkeit und Konsistenz des Steuerungssystems verbessern.

In jeder VM ist auch ein Sicherheitsprogramm vorhanden. Dieses Sicherheitsprogramm kann die spezifische Logik und Anweisungen enthalten, die entwickelt wurden, um den sicheren Betrieb des gesteuerten Prozesses oder der Ausrüstung zu gewährleisten.

Die Programmlaufzeitkomponente innerhalb der VM stellt möglicherweise die Ausführungsumgebung für das Sicherheitsprogramm bereit. Die Programmlaufzeit kann die im Sicherheitsprogramm definierten Anweisungen interpretieren und ausführen.

Jede VM enthält auch eine Steuerungsdatenbank. Diese Datenbank kann Konfigurationsdaten, Parameter und andere Informationen speichern, die für den Betrieb der vPLC und die Ausführung des Sicherheitsprogramms erforderlich sind.

Die Kombination dieser Komponenten innerhalb jeder VM kann die Erstellung einer voll funktionsfähigen virtuellen speicherprogrammierbaren Steuerung ermöglichen, die unabhängig in der bzw. den virtuellen Maschinen VM ablaufen.

## Patentansprüche

1. Verfahren zum Betreiben
- einer virtuellen speicherprogrammierbaren Steuerung (vPLC) mit einem Sicherheitsprogramm (F-Prog) auf einem ersten Rechnersystem (1) und
- einer virtuellen speicherprogrammierbaren Steuerung (vPLC) mit einem vom Sicherheitsprogramm (F-Prog) replizierten Sicherheitsprogramm (rF-Prog) auf einem zweiten Rechnersystem (2),
wobei für den Fall, dass das erste Rechnersystem (1) und/oder die darauf ablaufende virtuelle speicherprogrammierbare Steuerung (vPLC) ausfallen, auf das zweite Rechnersystem (2) bzw. auf die darauf installierte virtuelle speicherprogrammierbare Steuerung (vPLC) mit dem replizierten Sicherheitsprogramm (rF-Prog) umgeschaltet wird, wobei
- ein zentrales Signaturverwaltungs-Mittel (ZSV) betrieben wird, in welches eine Signatur (S1) und ein Zeitstempel (TS1) des Sicherheitsprogramms (F-Prog) in eine Verwaltungsliste (VWL) eingetragen werden, wobei im Falle einer Änderung an dem Sicherheitsprogramm (F-Prog) auf dem ersten Rechnersystem (1) die sich entsprechend geänderte Signatur (S1) und der geänderte Zeitstempel (TS1) in die Verwaltungsliste (VWL) eingetragen werden,
- das zentrale Signaturverwaltungs-Mittel (ZSV) weiterhin betrieben wird, um die Signatur (S1) und den Zeitstempel (TS1) in einen Kontroll-Datenbereich (KDB) der virtuellen speicherprogrammierbaren Steuerung (vPLC) zu schreiben,
- wobei zum Sicherstellen, dass auf dem zweiten Rechnersystem (2), also auf einer Instanz der virtuellen speicherprogrammierbaren Steuerung (vPLC) des ersten Rechnersystems (1), das vorhandene replizierte Sicherheitsprogramm (rF-Prog) dem Sicherheitsprogramm (F-Prog) auf dem ersten Rechnersystem (1) entspricht, beim Replizieren des Sicherheitsprogramms (F-Prog) für das zweite Rechnersystem (2) wird ein Verwaltungslisten-Abbild (VWL') von dem zentralen Signaturverwaltungs-Mittel (ZSV) des ersten Rechnersystems (1) für das zweite Rechnersystem (2) erzeugt und zyklisch durch das zentrale Signaturverwaltungs-Mittel (ZSV) des ersten Rechnersystems (1) aktualisiert, und
- eine Prüfroutine (PR) auf der speicherprogrammierbaren Steuerung (vPLC) auf dem zweiten Rechnersystem (2) betrieben wird, welche die Signatur und den Zeitstempel aus dem Kontroll-Datenbereich (KDB) mit der Signatur und dem Zeitstempel aus dem Verwaltungslisten-Abbild (VWL') vergleicht, wobei
- für den Fall, dass auf das zweite Rechnersystem (2) umgeschaltet wird, ein Startvorgang der Instanz der virtuellen speicherprogrammierbaren Steuerung (vPLC) zum Ausführen des replizierten Sicherheitsprogramms (rF-Prog) auf dem zweiten Rechnersystem (2) nur dann ausgeführt wird, wenn die Signaturen und Zeitstempel übereinstimmen.

2. Verfahren nach Anspruch 1, **dadurch gekennzeichnet, dass** das zentrale Signaturverwaltungs-Mittel (ZSV) auf einem separaten Rechnersystem betrieben wird, das von dem ersten Rechnersystem (1) und dem zweiten Rechnersystem (2) unabhängig ist.

3. Verfahren nach Anspruch 1 oder 2, **dadurch gekennzeichnet, dass** die Aktualisierung des Verwaltungslisten-Abbilds (VWL') in vordefinierten Zeitintervallen erfolgt.

4. Verfahren nach einem der vorhergehenden Ansprüche, **dadurch gekennzeichnet, dass** die Prüfroutine (PR) auf dem zweiten Rechnersystem (2) in regelmäßigen Abständen ausgeführt wird, um die Konsistenz zwischen dem replizierten Sicherheitsprogramm (rF-Prog) und dem Sicherheitsprogramm (F-Prog) sicherzustellen.

5. Verfahren nach einem der vorhergehenden Ansprüche, **dadurch gekennzeichnet, dass** bei Nichtübereinstimmung der Signaturen und Zeitstempel eine Aktualisierung des replizierten Sicherheitsprogramms (rF-Prog) auf dem zweiten Rechnersystem (2) initiiert wird.

6. Verfahren nach einem der vorhergehenden Ansprüche, **dadurch gekennzeichnet, dass** die Signatur (S1) mittels eines kryptographischen Verfahrens erzeugt wird.

7. Verfahren nach einem der vorhergehenden Ansprüche, **dadurch gekennzeichnet, dass** das zentrale Signaturverwaltungs-Mittel (ZSV) eine Versionsverwaltung für das Sicherheitsprogramm (F-Prog) und das replizierte Sicherheitsprogramm (rF-Prog) durchführt.

8. Verfahren nach einem der vorhergehenden Ansprüche, **dadurch gekennzeichnet, dass** bei einer Umschaltung auf das zweite Rechnersystem (2) eine Benachrichtigung an einen Systemadministrator gesendet wird.

9. Verfahren nach einem der vorhergehenden Ansprüche, **dadurch gekennzeichnet, dass** das erste Rechnersystem (1) und das zweite Rechnersystem (2) in getrennten physischen Standorten betrieben werden.

10. Verfahren nach einem der vorhergehenden Ansprüche, **dadurch gekennzeichnet, dass** die Kommunikation zwischen dem ersten Rechnersystem (1), dem zweiten Rechnersystem (2) und dem zentralen Signaturverwaltungs-Mittel (ZSV) über eine verschlüsselte Verbindung erfolgt.

11. Verfahren nach einem der vorhergehenden Ansprüche, **dadurch gekennzeichnet, dass**
- bei Initiierung eines Run-Vorgangs in der Instanz der virtuellen speicherprogrammierbaren Steuerung (vPLC) auf dem zweiten Rechnersystem (2) zunächst geprüft wird, ob Programmsignaturen (S) und Zeitstempel (TS) im Kontroll-Datenbereich (KDB) der Instanz vorhanden sind,
- bei Vorhandensein von Programmsignaturen (S) und Zeitstempeln (TS) im Kontroll-Datenbereich (KDB) die Programmsignatur im Kontroll-Datenbereich (KDB) auf einen Initialwert gesetzt wird und der Zeitstempel des Sicherheitsprogramms (F-Prog) gleich dem Zeitstempel aus dem Kontroll-Datenbereich (KDB) gesetzt wird,
- anschließend überprüft wird, ob eine Programmsignatur des Sicherheitsprogramms (F-Prog) vorhanden ist,
- bei vorhandener Programmsignatur des Sicherheitsprogramms (F-Prog) zyklisch bis zu einem vordefinierten Timeout geprüft wird, ob die Programmsignatur im Kontroll-Datenbereich (KDB) vom zentralen Signaturverwaltungs-Mittel (ZSV) beschrieben wurde,
- bei Überschreitung des Timeouts die virtuelle speicherprogrammierbare Steuerung (vPLC) in einen Stopp-Zustand mit entsprechender Diagnose versetzt wird,
- bei Beschreibung der Programmsignatur im Kontroll-Datenbereich (KDB) durch das zentrale Signaturverwaltungs-Mittel (ZSV) innerhalb des Timeouts geprüft wird, ob der Zeitstempel im Kontroll-Datenbereich (KDB) mit dem Zeitstempel des Sicherheitsprogramms (F-Prog) übereinstimmt,
- bei Übereinstimmung der Zeitstempel die virtuelle speicherprogrammierbare Steuerung (vPLC) anläuft, und
- bei Nichtübereinstimmung der Zeitstempel die virtuelle speicherprogrammierbare Steuerung (vPLC) in einen Stopp-Zustand mit entsprechender Diagnose versetzt wird, dass kein korrektes Sicherheitsprogramm (F-Prog) vorliegt.

12. Verfahren nach einem der vorhergehenden Ansprüche, **dadurch gekennzeichnet, dass**
- bei Beendigung oder Deaktivierung einer Instanz der virtuellen speicherprogrammierbaren Steuerung (vPLC) auf dem ersten Rechnersystem (1) oder dem zweiten Rechnersystem (2) ein Ablöschvorgang durchgeführt wird, wobei
- alle sicherheitsrelevanten Daten, einschließlich des Sicherheitsprogramms (F-Prog) oder des replizierten Sicherheitsprogramms (rF-Prog), der Programmsignaturen (S) und der Zeitstempel (TS) aus dem Speicher der betreffenden virtuellen speicherprogrammierbaren Steuerung (vPLC) gelöscht werden,
- das zentrale Signaturverwaltungs-Mittel (ZSV) über den Ablöschvorgang informiert wird,
- das zentrale Signaturverwaltungs-Mittel (ZSV) die entsprechenden Einträge in der Verwaltungsliste (VWL) für die betroffene Instanz entfernt oder als ungültig markiert,
- bei einer späteren Reaktivierung der Instanz eine vollständige Neuinitialisierung und Synchronisation mit dem zentralen Signaturverwaltungs-Mittel (ZSV) durchgeführt wird, um die Integrität und Aktualität des Sicherheitsprogramms (F-Prog) oder des replizierten Sicherheitsprogramms (rF-Prog) sicherzustellen.

13. Verfahren nach einem der vorhergehenden Ansprüche, **dadurch gekennzeichnet, dass**
- die Prüfroutine (PR) innerhalb einer Laufzeit-Umgebung (FW) der virtuellen speicherprogrammierbaren Steuerung (vPLC) betrieben wird,
- die Laufzeit-Umgebung (FW) als Firmware der virtuellen speicherprogrammierbaren Steuerung (vPLC) implementiert ist,
- die Laufzeit-Umgebung (FW) das Sicherheitsprogramm (F-Prog) oder das replizierte Sicherheitsprogramm (rF-Prog) ausführt,
- die Laufzeit-Umgebung (FW) den Kontroll-Datenbereich (KDB) verwaltet, in dem die Signatur (S1) und der Zeitstempel (TS) gespeichert sind.

14. Verfahren nach einem der vorhergehenden Ansprüche, **dadurch gekennzeichnet, dass**
- eine Edge-App installiert wird, in welcher das zentrale Signaturverwaltungs-Mittel (ZSV) für alle Sicherheitsprogramme in einem Edge-System betrieben wird,
- die Edge-App die Verwaltungsliste (VWL) mit den Programmsignaturen und den Zeitstempeln für alle verbundenen fehlersicheren virtuellen PLCs (F-vPLCs) verwaltet,
- die Edge-App ein Datenmanagement ausführt, welches Programmsignaturen und Zeitstempel für jedes Sicherheitsprogramm speichert und aktualisiert,
- die Edge-App ein Kommunikations-Mittel (KM) betreibt, welches auf den Speicherbereich der Signaturen und Zeitstempel sowie den Kontroll-Bereich dieser innerhalb der Safety vPLC liest und schreibt,
- die Edge-App eine zentrale Verwaltungsinstanz für die Sicherheit und Integrität aller Sicherheitsprogramme im Edge-System darstellt.
